# EUROPEAN PATENT APPLICATION

(11) **EP 2 913 650 A1**
(43) Date of publication of application: **02.09.2015**
(21) Application number: 14200672.5
(22) Date of filing: 30.12.2014
(51) Int. Cl.: G01L 5/22, G01L 1/18, G01L 1/20, G06F 3/041, G06F 3/045

(54) **PRESSURE SENSOR FOR TOUCH PANEL**

(30) Priority: 28.02.2014 KR 20140024037
(71) Applicant: Core Logic Inc., Seongnam-si Gyeonggi-do 463-400 (KR)
(72) Inventor: Yang, Young-Bae, Seongnam-si, Gyeonggi-do 463-420 (KR); Jung, Dong-Gju, Seongnam-si, Gyeonggi-do 443-280 (KR)
(74) Representative: Misselbrook, Paul

(57) **Abstract**

Disclosed herein is a pressure sensor for a touch panel, including a signal input member configured to have conductors patterned thereon in an interdigitated form on a substrate, wherein conductor patterns on one side of the signal input member are formed in parallel in a comb pattern and connected on the lower part, and conductor patterns on the other side of the signal input member are formed in parallel in a comb pattern, connected on the upper part, and arranged in such a way as to be interdigitated with the conductor patterns on the first side, spacers disposed at top and bottom corners in which the conductor patterns are not formed on the substrate of the signal input member, a left support disposed in some region of a corner on the left side in which the conductor patterns are not formed on the substrate of the signal input member, a right support disposed in some region of a corner on the right side in which the conductor patterns are not formed on the substrate of the signal input member, a piezo film disposed on the spacers and the left and right supports, spaced apart from the signal input member, and configured to have a resistance value varied depending on an amount of pressure applied to the piezo film, and pressure supplement units disposed between the piezo film and the signal input member and disposed under regions of the piezo film to which inputs of keys having a greater width than other keys are transferred.

## Description

### CROSS REFERENCE TO RELATED APPLICATION

The present application claims the benefit of Korean Patent Application No. 10-2014-0024037 filed in the Korean Intellectual Property Office on February 28, 2014, the entire contents of which are incorporated herein by reference.

### BACKGROUND OF THE INVENTION

### 1. Technical Field

The present invention relates to a pressure sensor for a touch panel and, more particularly, to a pressure sensor for a touch panel, which is capable of effectively preventing an error of a touch input.

### 2. Description of the Related Art

In general, in a device, such as a Personal Computer (PC) or a network terminal, a keyboard is widely used as means for an interface between the device and a user.

Most of keyboards have mechanical elements. Springs and switches are disposed under keys fabricated by injection molding. When a user strikes a key using specific strength, a corresponding switch is manipulated by overcoming its elastic force, thereby performing a key input.

In addition to the keyboard having such mechanical elements, a keyboard using a touch panel method has emerged. The keyboard using a touch panel method is equipped with technical means for detecting and recognizing whether contact with the human body (e.g., a finger) or a pen has been made or not based on the detection of current of the human body or a change in pressure or temperature according to the touch. In particular, a touch panel using a method of detecting whether contact with the human body or a pen has been made or not using a change in pressure has been in the spotlight.

In such a touch panel using a pressure sensor, a piezo film is disposed on top of a spacer. In this case, there is a problem in that an error of a touch input is generated in regions to which the inputs of keys (e.g., a Space key input, a Shift key input, and an Enter key input) having a greater width than other keys are transferred to a piezo film.

The background of the present invention is disclosed in Korean Patent No. 10-1094165 (December 08, 2011).

### SUMMARY OF THE INVENTION

Accordingly, the present invention has been made keeping in mind the above problems occurring in the prior art, and an object of the present invention is to provide a pressure sensor for a touch panel, which is capable of effectively preventing an error of a touch input by arranging pressure supplement units under the regions of a piezo film to which the inputs of keys having a greater width than other keys are transferred.

A pressure sensor for a touch panel in accordance with an embodiment of the present invention includes a signal input member configured to have conductors patterned thereon in an interdigitated form on a substrate, wherein conductor patterns on one side of the signal input member are formed in parallel in a comb pattern and connected on the lower part, and conductor patterns on the other side of the signal input member are formed in parallel in a comb pattern, connected on the upper part, and arranged in such a way as to be interdigitated with the conductor patterns on one side, spacers disposed at top and bottom corners in which the conductor patterns are not formed on the substrate of the signal input member, a left support disposed in some region of a corner on the left side in which the conductor patterns are not formed on the substrate of the signal input member, a right support disposed in some region of a corner on the right side in which the conductor patterns are not formed on the substrate of the signal input member, a piezo film disposed on the spacers and the left and right supports, spaced apart from the signal input member, and configured to have a resistance value varied depending on an amount of pressure applied to the piezo film, and pressure supplement units disposed between the piezo film and the signal input member and disposed under regions of the piezo film to which inputs of keys having a greater width than other keys are transferred.

In the pressure sensor for a touch panel in accordance with an embodiment of the present invention, the input of the key having a greater width than the other keys may include any one of a Space key input, a Shift key input, and an Enter key input.

In the pressure sensor for a touch panel in accordance with an embodiment of the present invention, the left support may be disposed in the central area of the corner on the left side in which the conductor patterns are not formed on the substrate of the signal input member.

In the pressure sensor for a touch panel in accordance with an embodiment of the present invention, the right support may be disposed in the central area of the corner on the right side in which the conductor patterns are not formed on the substrate of the signal input member.

In the pressure sensor for a touch panel in accordance with an embodiment of the present invention, an interval D1 between conductor patterns that are formed in the signal input member and that are disposed close to the left support or the right support may be smaller than an interval D2 between conductor patterns that are formed in the signal input member and that are disposed at a farthest place from the left support or the right support.

In the pressure sensor for a touch panel in accordance with an embodiment of the present invention, the interval D1 between the conductor patterns disposed close to the left support or the right support may be 0.2 ∼ 0.6 times the interval D2 between the conductor patterns disposed at the farthest place from the left support or the right support.

In the pressure sensor for a touch panel in accordance with an embodiment of the present invention, the length L1 of the left support may be 0.1 ∼ 0.6 times the length L2 of the conductor pattern formed in the signal input member.

In the pressure sensor for a touch panel in accordance with an embodiment of the present invention, the length R1 of the right support may be 0.1 ∼ 0.6 times the length L2 of the conductor pattern formed in the signal input member.

In the pressure sensor for a touch panel in accordance with an embodiment of the present invention, the left support may have a height of 0.08 ∼ 0.15 mm.

In the pressure sensor for a touch panel in accordance with an embodiment of the present invention, the right support may have a height of 0.08 ∼ 0.15 mm.

A pressure sensor for a touch panel in accordance with another embodiment of the present invention includes a signal input member configured to have conductors patterned thereon in an interdigitated form on a substrate, wherein conductor patterns on one side of the signal input member are formed in parallel in a comb pattern and connected on the lower part, and conductor patterns on the other side of the signal input member are formed in parallel in a comb pattern, connected on the upper part, and arranged in such a way as to be interdigitated with the conductor patterns on one side, a spacer disposed at a corner where the conductor patterns are not formed on the substrate of the signal input member and, a piezo film disposed over the spacer, spaced apart from the signal input member, and configured to have a resistance value varied depending on an amount of pressure applied to the piezo film, and pressure supplement units disposed between the piezo film and the signal input member and disposed under regions of the piezo film to which the inputs of keys having a greater width than other keys are transferred, wherein an interval D1 between the conductor patterns formed in the signal input member and disposed close to the spacer is smaller than an interval D2 between the conductor patterns formed in the signal input member and disposed at a farthest place from the spacer.

In the pressure sensor for a touch panel in accordance with another embodiment of the present invention, the input of the key having a greater width than the other keys may include any one of a Space key input, a Shift key input, and an Enter key input.

In the pressure sensor for a touch panel in accordance with another embodiment of the present invention, the interval D1 between the conductor patterns formed in the signal input member and disposed close to the spacer may be 0.2 ∼ 0.6 times the interval D2 between the conductor patterns formed in the signal input member and disposed at a farthest place from the spacer.

In the pressure sensor for a touch panel in accordance with another embodiment of the present invention, the spacer may have a height of 0.08 ∼ 0.15 mm.

### BRIEF DESCRIPTION OF THE DRAWINGS

FIG. 1 is a perspective view of a pressure sensor for a touch panel in accordance with an embodiment of the present invention;
FIG. 2 is a cross-sectional view of the pressure sensor for a touch panel in accordance with an embodiment of the present invention;
FIG. 3 is a perspective view of a pressure sensor for a touch panel in accordance with another embodiment of the present invention; and
FIG. 4 is a cross-sectional view of the pressure sensor for a touch panel in accordance with another embodiment of the present invention.

### DETAILED DESCRIPTION

The details of other embodiments are included in the detailed description and the drawings.

The merits and characteristics of the present invention and a method for achieving the merits and characteristics will become more apparent from embodiments described in detail later in conjunction with the accompanying drawings. However, the present invention is not limited to the disclosed embodiments, but may be implemented in various ways. The embodiments are provided to complete the disclosure of the present invention and to allow those skilled in the art to understand the scope of the present invention. The present invention is defined by the category of the claims. The same reference numbers will be used to refer to the same or similar parts throughout the drawings.

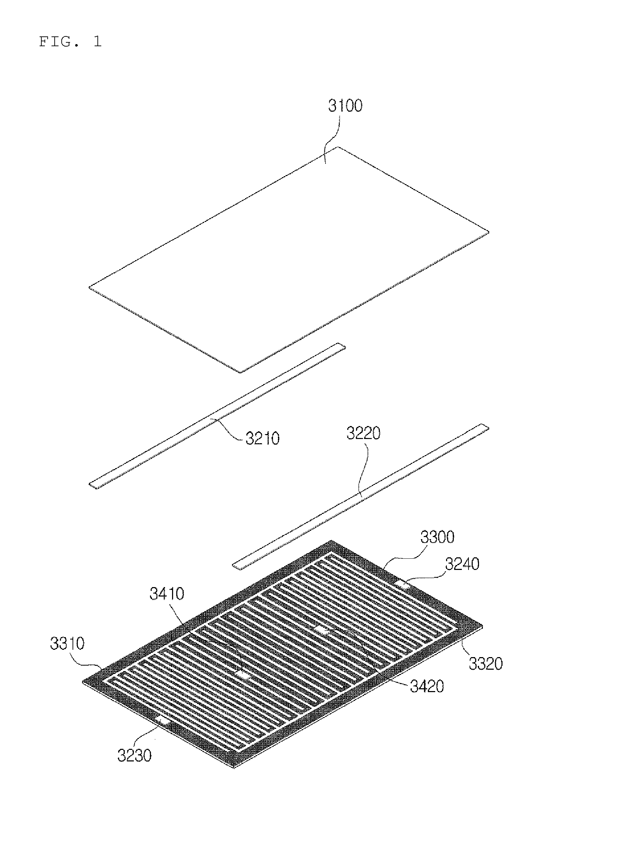

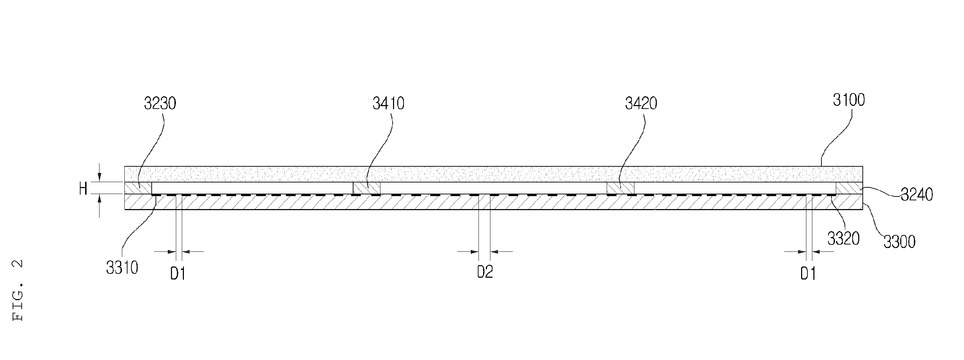

As shown in FIGS. 1 and 2, a pressure sensor for a touch panel in accordance with an embodiment of the present invention is configured to include a signal input member 3300, spacers 3210 and 3220, a piezo film 3100, a left support 3230, a right support 3240, and pressure supplement units 3410 and 3420.

As shown in FIG. 1, the signal input member 3300 is configured to have conductors patterned thereon in an interdigitated form on a substrate.

In this case, conductor patterns 3310 on one side are formed in parallel in a comb pattern and are connected on the lower part. Conductor patterns 3320 on the other side are formed in parallel in a comb pattern, are connected on the upper part, and are arranged as if they are interdigitated with the conductors 3310.

The spacers 3210 and 3220 are disposed at the top and bottom corners in which the conductor patterns 3310 and 3320 are not formed on the substrate of the signal input member 3300.

The piezo film 3100 is disposed over the spacers 3210 and 3220 and the left support 3230 and the right support 3240, and is spaced apart from the signal input member 3300. When the amount of pressure applied to the piezo film 3100 increases, the resistance value of the piezo film 3100 decreases. When the amount of pressure applied to the piezo film 3100 decreases, the resistance value of the piezo film 3100 increases.

When a touch is applied to the piezo film 3100, the resistance value of the piezo film 3100 is changed depending on the amount of touch pressure. As described above, when touch pressure is increased, the resistance value the piezo film 3100 is reduced. As a result, a key input can be detected because a power source voltage applied to the piezo film 3100 is reduced.

The left support 3230 is disposed in some region at the center of a corner on the left side on which a conductor pattern is not formed on the substrate of the signal input member 3300. The right support 3240 is disposed in some region at the center of a corner on the right side on which a conductor pattern is not formed on the substrate of the signal input member 3300.

More specifically, the length L1 of the left support 3230 or the length R1 of the right support 3240 is 0.1 ∼ 0.6 times the length L2 of a conductor pattern of the signal input member 3300.

In the pressure sensor for a touch panel in accordance with an embodiment of the present invention, an interval D1 between the conductor patterns 3310 and 3320 that are formed in the signal input member 3300 and that are disposed close to the left support 3230 or the right support 3240 is smaller than an interval D2 between the conductor patterns 3310 and 3320 that are formed in the signal input member 3300 and that are disposed at the farthest place from the left support 3230 or the right support 3240.

More specifically, the interval D1 between the conductor patterns 3310 and 3320 disposed close to the left support 3230 or the right support 3240 is 0.2 ∼ 0.6 times the interval D2 between the conductor patterns 3310 and 3320 disposed at the farthest place from the left support 3230 or the right support 3240.

In the pressure sensor for a touch panel in accordance with an embodiment of the present invention, as described above, the left support 3230 is disposed in some region at the center of the corner on the left side on which a conductor pattern is not formed on the substrate of the signal input member 3300, and the right support 3240 is disposed in some region at the center of the corner on the right side on which a conductor pattern is not formed on the substrate of the signal input member 3300. Accordingly, although low pressure is transferred to the conductor patterns 3310 and 3320 disposed close to the left support 3230 or the right support 3240, an error of a touch input can be effectively suppressed.

Furthermore, in the pressure sensor for a touch panel in accordance with an embodiment of the present invention, as described above, the conductor patterns 3310 and 3320 formed in the signal input member 3300 and disposed close to the left support 3230 or the right support 3240 are more densely arranged than the conductor patterns 3310 and 3320 formed in the signal input member 3300 and disposed at the farthest place from the left support 3230 or the right support 3240. Accordingly, although low pressure is transferred to the conductor patterns 3310 and 3320 disposed close to the left support 3230 or the right support 3240, an error of a touch input can be effectively suppressed.

In the pressure sensor for a touch panel in accordance with an embodiment of the present invention, the pressure of a touch input can be effectively transferred to the conductor patterns 3310 and 3320 and the pressure sensor can also be sufficiently thinly fabricated by controlling the height H of the left support 3230 or the right support 3240 in thickness of about 0.08 ∼ 0.15 mm.

The pressure sensor for a touch panel in accordance with an embodiment of the present invention further includes pressure supplement units 3410 and 3420 disposed between the piezo film 3100 and the signal input member 3300 and placed under the regions of the piezo film 3100 to which the inputs of keys having a greater width than other keys are transferred.

In this case, the input of the key having a greater width than other keys is any one of a Space key input, a Shift key input, and an Enter key input.

In the pressure sensor for a touch panel in accordance with an embodiment of the present invention, an error of a touch input can be more effectively prevented because the pressure supplement units 3410 and 3420 are arranged under the regions of the piezo film to which the inputs of keys having a greater width than other keys are transferred.

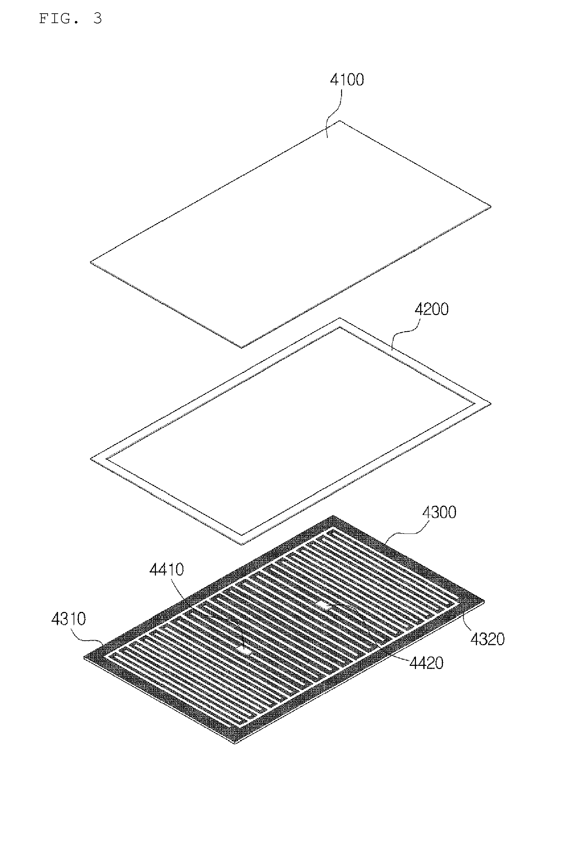

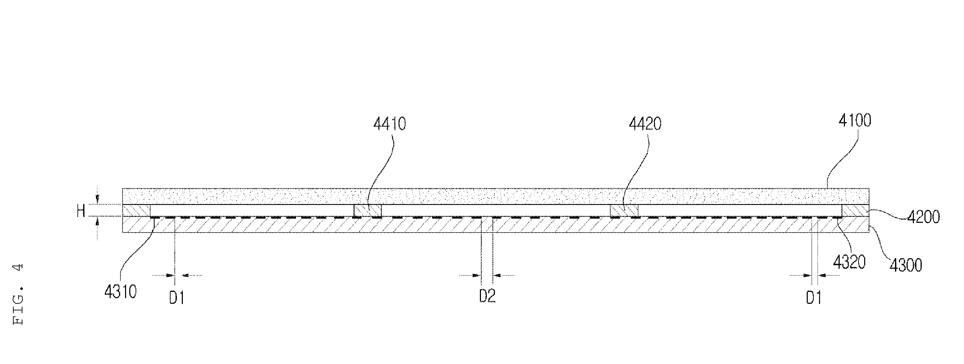

A difference between a pressure sensor for a touch panel in accordance with another embodiment of the present invention and the pressure sensor for a touch panel in accordance with an embodiment of the present invention is described below with reference to FIGS. 3 and 4.

As shown in FIGS. 3 and 4, the pressure sensor for a touch panel in accordance with another embodiment of the present invention is configured to include a signal input member 4300, a spacer 4200, a piezo film 4100, and pressure supplement units 4410 and 4420.

The spacer 4200 of the pressure sensor for a touch panel in accordance with another embodiment of the present invention is disposed at a corner in which conductor patterns 4310 and 4320 are not formed on the substrate of the signal input member 4300.

In the pressure sensors for a touch panel according to the embodiments of the present invention, an error of a touch input can be effectively prevented because the pressure supplement units are arranged under the regions of the piezo film to which the inputs of keys having a greater width than other keys are transferred.

As described above, those skilled in the art to which the present invention pertains will appreciate that the present invention may be implemented in different detailed ways without departing from the technical spirit or essential characteristics of the present invention. Accordingly, the aforementioned embodiments should be construed as being only illustrative, but should not be constructed as being restrictive from all aspects. The scope of the present invention is defined by the following claims rather than the detailed description, and the meanings and scope of the claims and all changes or modified forms derived from their equivalents should be construed as falling within the scope of the present invention.

## Claims

1. A pressure sensor for a touch panel, comprising:
a signal input member configured to have conductors patterned thereon in an interdigitated form on a substrate, wherein conductor patterns on one side of the signal input member are formed in parallel in a comb pattern and connected on a lower part, and conductor patterns on the other side of the signal input member are formed in parallel in a comb pattern, connected on an upper part, and arranged in such a way as to be interdigitated with the conductor patterns on the first side;
spacers disposed at top and bottom corners in which the conductor patterns are not formed on the substrate of the signal input member;
a left support disposed in some region of a corner on a left side in which the conductor patterns are not formed on the substrate of the signal input member;
a right support disposed in some region of a corner on a right side in which the conductor patterns are not formed on the substrate of the signal input member;
a piezo film disposed on the spacers and the left and right supports, spaced apart from the signal input member, and configured to have a resistance value varied depending on an amount of pressure applied to the piezo film; and
pressure supplement units disposed between the piezo film and the signal input member and disposed under regions of the piezo film to which inputs of keys having a greater width than other keys are transferred.

2. The pressure sensor of claim 1, wherein the input of the key having a greater width than the other keys comprises any one of a Space key input, a Shift key input, and an Enter key input.

3. The pressure sensor of claim 1, wherein the left support is disposed in a central area of the corner on the left side in which the conductor patterns are not formed on the substrate of the signal input member.

4. The pressure sensor of claim 1, wherein the right support is disposed in a central area of the corner on the right side in which the conductor patterns are not formed on the substrate of the signal input member.

5. The pressure sensor of claim 1, wherein an interval D1 between conductor patterns that are formed in the signal input member and that are disposed close to the left support or the right support is smaller than an interval D2 between conductor patterns that are formed in the signal input member and that are disposed at a farthest place from the left support or the right support.

6. The pressure sensor of claim 5, wherein the interval D1 between the conductor patterns disposed close to the left support or the right support is 0.2 ∼ 0.6 times the interval D2 between the conductor patterns disposed at the farthest place from the left support or the right support.

7. The pressure sensor of claim 1, wherein a length L1 of the left support is 0.1 ∼ 0.6 times a length L2 of the conductor pattern formed in the signal input member.

8. The pressure sensor of claim 1, wherein a length R1 of the right support is 0.1 ∼ 0.6 times a length L2 of the conductor pattern formed in the signal input member.

9. The pressure sensor of claim 1, wherein the left support has a height of 0.08 ∼ 0.15 mm.

10. The pressure sensor of claim 1, wherein the right support has a height of 0.08 ∼ 0.15 mm.

11. A pressure sensor for a touch panel, comprising:
a signal input member configured to have conductors patterned thereon in an interdigitated form on a substrate, wherein conductor patterns on one side of the signal input member are formed in parallel in a comb pattern and connected on a lower part, and conductor patterns on the other side of the signal input member are formed in parallel in a comb pattern, connected on an upper part, and arranged in such a way as to be interdigitated with the conductor patterns on the first side;
a spacer disposed at a corner where the conductor patterns are not formed on the substrate of the signal input member and;
a piezo film disposed over the spacer, spaced apart from the signal input member, and configured to have a resistance value varied depending on an amount of pressure applied to the piezo film; and
pressure supplement units disposed between the piezo film and the signal input member and disposed under regions of the piezo film to which inputs of keys having a greater width than other keys are transferred,
wherein an interval D1 between the conductor patterns formed in the signal input member and disposed close to the spacer is smaller than an interval D2 between the conductor patterns formed in the signal input member and disposed at a farthest place from the spacer.

12. The pressure sensor of claim 11, wherein the input of the key having a greater width than the other keys comprises any one of a Space key input, a Shift key input, and an Enter key input.

13. The pressure sensor of claim 11, wherein the interval D1 between the conductor patterns formed in the signal input member and disposed close to the spacer is 0.2 ∼ 0.6 times the interval D2 between the conductor patterns formed in the signal input member and disposed at a farthest place from the spacer.

14. The pressure sensor of claim 11, wherein the spacer has a height of 0.08 ∼ 0.15 mm.
